# EUROPÄISCHE PATENTANMELDUNG

(11) **EP 3 012 778 A2**
(43) Veröffentlichungstag der Anmeldung: **27.04.2016**
(21) Anmeldenummer: 15183892.7
(22) Anmeldetag: 04.09.2015
(51) Int. Cl.: G06K 9/20

(54) **KAMERA UND VERFAHREN ZUR ERFASSUNG VON OBJEKTEN**

(30) Priorität: 24.10.2014 DE 102014115540
(71) Anmelder: SICK AG, 79183 Waldkirch (DE)
(72) Erfinder: Reichenbach, Jürgen, 79312 Emmendingen (DE); Egger, Christoph, 79211 Denzlingen (DE); Nopper, Richard, 79261 Gutach (DE)

(57) **Zusammenfassung**

Es wird eine Kamera (10) zur Erfassung von Objekten (30) in einem Erfassungsbereich (16) angegeben, die einen Lichtempfänger (22) mit einer Vielzahl von Lichtempfangspixeln, eine multispektrale Beleuchtungseinrichtung (12) zum Beleuchten des Erfassungsbereichs (16) in unterschiedlichen Spektralbändern und eine Auswertungseinheit (24) aufweist, die dafür ausgebildet ist, den Erfassungsbereich (16) mittels der Beleuchtungseinrichtung (12) während verschiedener Beleuchtungszeitfenster (38a-c) in einem jeweils anderen Spektralband zu beleuchten und mit dem Lichtempfänger (22) in Aufnahmezeitfenstern (40a-c, 42a-c) Bilddaten aus dem Erfassungsbereich (16) aufzunehmen. Dabei ist der Lichtempfänger (22) als Doppelzeilenempfänger mit einer ersten Zeile (22a) und einer zweiten Zeile (22b) von Lichtempfangspixeln ausgebildet, und die Aufnahmezeitfenster (40a-c, 42a-c) für die erste Zeile (22a) und die zweite Zeile (22b) sind unterschiedlich.

## Beschreibung

Die Erfindung betrifft eine Kamera und ein Verfahren zur Erfassung von Objekten nach dem Oberbegriff von Anspruch 1 beziehungsweise 12.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Manche Objektstrukturen sind nur unter Beleuchtung mit gewissen spektralen Eigenschaften kontrastreich erkennbar. Das gilt insbesondere für das Lesen von farbigen Codes auf farbigen Objekten mit einem Bildverarbeitungssystem. Dazu können Farbkameras eingesetzt werden. Sie verwenden eine spektral breit verteilte Lichtquelle, und vor den Kamerapixeln befinden sich Farbfilter, die jeweils nur einen bestimmten spektralen Anteil des Empfangslichts passieren lassen. Die räumliche Verteilung dieser Filter definiert die Kameraauflösung für die einzelnen spektralen Anteile. Bei Matrixsensoren ist das Bayer-Pattern weit verbreitet, bei dem die Grundfarben Rot, Grün und Blau im Verhältnis 1:2:1 schachbrettartig angeordnet sind.

Bei Zeilenkameras werden verschiedene Wege eingeschlagen. Eine Möglichkeit besteht darin, drei Zeilen mit jeweils einem Farbfilter für Rot, Grün und Blau vorzusehen. Alternativ kann auch innerhalb einer Zeile ein alternierendes Muster der Farbfilter verwendet werden. Es gibt auch Doppelzeilensensoren, auf denen sich dann das schachbrettartige Bayer-Pattern realisieren lässt.

Gerade für das Lesen von Codes kommt es aber auf die spektralen Absolutwerte gar nicht an, sondern vielmehr auf einen hohen Grauwertkontrast. Die Farbfilter absorbieren jedoch einen sehr spürbaren Anteil der Lichtenergie, haben also einen schlechten optischen Wirkungsgrad. Zudem reduzieren die Farbfilter die Ortsauflösung deutlich, da pro Grundfarbe nur ein Bruchteil der Gesamtpixel zur Verfügung steht. Die Herstellung von Bildsensoren mit Farbfiltern erfordert zusätzliche Arbeitsgänge mit erhöhten Herstellkosten, und dabei ist die Anordnung durch die Filterstruktur festgelegt und nicht mehr flexibel auf die konkrete Erfassungssituation anpassbar.

Aus der DE 20 2009 009 493 U1 ist ein kamerabasierter Codeleser bekannt, der die Farbe seiner Beleuchtung verändern kann, um je nach Code und Codehintergrund ein Frequenzspektrum zu verwenden, das zu einem möglichst hohen Kontrast führt. Auf dieses eine für die festgelegten Farben gefundene Frequenzspektrum ist dann aber das System zum Lesen festgelegt. Ein Frequenzspektrum genügt aber oft nicht, um alle Bildmerkmale optimal zu erfassen, wie besonders deutlich im Beispiel gleichzeitig erfasster Codes auf Objekten unterschiedlicher Farbe.

Die DE 10 2008 016 766 A1 offenbart eine Sicherheitskamera mit monochromem Bildsensor und in ihrer Farbe umschaltbarer Beleuchtung. Für eine Auswertung werden jeweils zwei Bilder bei unterschiedlicher Beleuchtung aufgenommen, oder es findet eine Umschaltung der Beleuchtung statt, wenn der Kontrast nicht ausreicht. Auch hier besteht das Problem, dass zwar unterschiedliche Beleuchtungsszenarien berücksichtigt werden können, jedoch nur zeitversetzt. Bei hochdynamischen Szenerien steht dann doch wieder nur ein Bild mit fester Beleuchtung zur Verfügung. Dies gilt auch für die Situation einer Hochgeschwindigkeits-Zeilenkamera an einem Förderband, wo nach dem Umschalten der Beleuchtung nur noch die nächste Bildzeile des nächsten Abschnitts eines weitergeförderten Objekts aufgenommen werden kann.

Es ist daher Aufgabe der Erfindung, die Erfassung von Objektstrukturen unter Berücksichtigung von deren spektralen Eigenschaften zu verbessern.

Diese Aufgabe wird durch eine Kamera und ein Verfahren zur Erfassung von Objekten nach Anspruch 1 beziehungsweise 12 gelöst. Die Erfindung geht von dem Grundgedanken aus, einen Lichtempfänger als Doppelzeilenempfänger auszubilden. Obwohl ähnliche Effekte auch mit zwei Bildsensoren oder zwei Pixelgruppen, insbesondere Zeilen eines Matrixchips erzielt werden könnten, ist damit ein Lichtempfänger aus genau zwei Pixelzeilen gemeint (Dual Line Camera). Dieser Doppelzeilenempfänger nimmt durch unterschiedliche Aufnahmezeitfenster seiner beiden Zeilen von Lichtempfangspixeln die Bilddaten doppelt, jedoch bei unterschiedlicher Beleuchtung einer multispektralen Beleuchtung auf.

Die Kamera schaltet die multispektrale Beleuchtung sequentiell zwischen mehreren ausgesandten Spektralbändern um. Durch Ansteuerung von Beleuchtung und Lichtempfänger können zunächst einmal unabhängig Beleuchtungszeitfenster und Aufnahmezeitfenster festgelegt werden, in denen die Szenerie mit einem bestimmten Spektralband beleuchtet beziehungsweise Bilddaten aus der Szenerie erfasst werden. Aufnahmezeitfenster können damit ein oder mehrere Beleuchtungszeitfenster ganz oder teilweise umfassen und dabei auch unterbrochen werden. Die Aufnahmezeitfenster sind vorzugsweise mit den Beleuchtungszeitfenstern synchronisiert, aber im allgemeinen Sinne von zeitlich aufeinander abgestimmt und wie soeben erläutert nicht zwingend im Sinne von gleichzeitig oder gleich lang.

Die Erfindung hat den Vorteil, dass durch das abgestimmte Zeitverhalten von Lichtempfänger und Beleuchtung für die Zeilen des Doppelzeilenempfängers jeweils ein eigenes Beleuchtungsspektrum ausgewählt wird. Dabei sind die Aufnahmebedingungen bis auf die gewünschte Variation der Beleuchtung nahezu identisch, so dass für die weitere Auswertung die gleichen Bilddaten praktisch doppelt, jedoch zur besseren Kontrastdifferenzierung bei Beleuchtung in unterschiedlichen Spektralbereichen vorliegen. Der Zeilentransfer des Doppelzeilenempfängers ermöglicht gleichzeitiges Belichten und Auslesen, und die effektive Bildrate kann erhalten bleiben. Im Gegensatz zu der einleitend erläuterten herkömmlichen Verwendung von Farbfiltern vor dem Lichtempfänger wird die Lichtenergie optimal ausgenutzt, und es ergibt sich ein sehr gutes Signal-Rausch-Verhältnis. Die Umstellung auf andere Farbkombinationen beziehungsweise spektrale Aufnahmebedingungen wird erheblich erleichtert, da der Lichtempfänger keine festen Farbfilter benötigt. Auch der mit den Farbfiltern einhergehende Verlust an Ortsauflösung wird vermieden.

Die Beleuchtungseinrichtung ist vorzugsweise für die Beleuchtung in mindestens zwei der folgenden Spektralbänder ausgebildet: rot, grün, blau, sichtbar, infrarot, ultraviolett. Eine bevorzugte Kombination sind drei Spektralbänder in den Grundfarben rot, grün und blau des sichtbaren Spektrums. Andere Kombinationen umfassen beispielsweise das sichtbare Licht in einem Spektralband zusätzlich zu infrarot oder ultraviolett. Die Aufzählung der Spektralbänder und Kombinationen ist nicht abschließend. So sind auch breitere Spektralbänder denkbar, die mehrere Farben oder beispielsweise das sichtbare und infrarote Spektrum umfassen.

Die Auswertungseinheit ist bevorzugt dafür ausgebildet, das Spektralband der Beleuchtungseinrichtung zyklisch zu wechseln. Dies kann auch durch einen Pulsbetrieb erreicht werden. Ein Beispiel für zyklischen Wechsel ist das regelmäßige Durchspielen der möglichen Spektralbänder, also bei zwei Spektralbändern ein einfaches Abwechseln, bei drei oder mehr Spektralbändern ein entsprechendes periodisches Alternieren.

Die Auswertungseinheit ist bevorzugt dafür ausgebildet, die Reihenfolge der von der Beleuchtungseinrichtung erzeugten Spektralbänder in zumindest einigen Zyklen zu permutieren. Der Wechsel der Spektralbänder bildet in dieser Betrachtungsweise eine Art geschachtelten Doppelzyklus. In kürzeren Zyklen wird jedes Spektralband einmal eingesetzt, jedoch die Reihenfolge im jeweils nächsten kürzeren Zyklus permutiert. Nach mehreren dieser kürzeren Zyklen wiederholt sich das Ganze periodisch in längeren Zyklen. Damit weicht der zyklische Wechsel der Spektralbänder gezielt von einem einfachen regelmäßigen Durchspielen ab. Das dient dazu, dass in bestimmten Zyklen bestimmte Spektralbänder zu bestimmten Zeitpunkten eingesetzt werden oder aufeinander folgen und erleichtert so die Festlegung geeigneter Aufnahmezeitfenster.

Die Auswertungseinheit ist bevorzugt dafür ausgebildet, die Aufnahmezeitfenster für zumindest eine Zeile jeweils innerhalb eines Beleuchtungszeitfensters festzulegen, so dass eine Aufnahme jeweils während der Beleuchtung mit nur einem Spektralband erfolgt. Das Aufnahmezeitfenster ist höchstens so lang wie das Beleuchtungszeitfenster, womit eine Aufnahme gerade unter der entsprechenden Beleuchtung entsteht. Von Aufnahme zu Aufnahme wird das Aufnahmezeitfenster vorzugsweise verschoben, so dass es jeweils in einem anderen Beleuchtungszeitfenster mit alternierendem Spektralband liegt.

Die Auswertungseinheit ist alternativ dafür ausgebildet, die Aufnahmezeitfenster für zumindest eine Zeile jeweils über zwei Beleuchtungszeitfenster festzulegen, so dass eine Aufnahme jeweils während der Beleuchtung zuerst mit einem und dann mit einem anderen Spektralband erfolgt. In dem Aufnahmezeitfenster wird somit unter Beleuchtung mit zwei unterschiedlichen Spektralbändern belichtet, und damit werden Spektralbänder kombiniert. Dazu liegt das Aufnahmezeitfenster vorzugsweise um den Übergang zwischen zwei Beleuchtungszeitfenstern. Es ist aber auch denkbar, ein mehrteiliges Aufnahmezeitfenster vorzusehen, welches zwischenzeitlich während der Beleuchtung mit mindestens einem weiteren, nicht zu erfassenden Spektralband geschlossen ist.

Die Auswertungseinheit ist bevorzugt dafür ausgebildet ist, die Aufnahmezeitfenster für die andere Zeile so festzulegen, dass eine Aufnahme jeweils während der Beleuchtung mit allen Spektralbändern erfolgt. Während also die eine Zeile, wie in den vorigen beiden Absätzen erläutert, Licht in einem Spektralband oder der Kombination aus zwei Spektralbändern erfasst, nimmt die andere Zeile Licht in sämtlichen benutzten Spektralbändern auf. Wenn beispielsweise die Beleuchtung zyklisch zwischen den Grundfarben Rot, Grün und Blau wechselt, entsteht so praktisch ein Bild unter weißem Licht, weil das Aufnahmezeitfenster der anderen Zeile offen bleibt, bis einmal mit allen Farben beleuchtet wurde. Zwischenzeitliche Unterbrechungen zur Vermeidung einer Überbelichtung in zumindest einem Spektralbereich sind dabei möglich.

Die Auswertungseinheit ist bevorzugt dafür ausgebildet, Bilddaten der beiden Zeilenzueinander zu addieren oder voneinander zu subtrahieren. Dadurch können Farben kombiniert und rekonstruiert werden. Nimmt beispielsweise die eine Zeile jeweils Kombinationen zweier Grundfarben auf und die andere Zeile alle Farben, so kann durch Subtraktion die zu den beiden Grundfarben komplementäre Grundfarbe rekonstruiert werden.

Die Auswertungseinheit ist bevorzugt dafür ausgebildet, die Länge der Beleuchtungszeitfenster und/oder der Aufnahmezeitfenster in Abhängigkeit von der spektralen Empfindlichkeit des Lichtempfängers für die jeweils erfassten Spektralbänder anzupassen. Die Anpassung an die Empfindlichkeit des Lichtempfängers soll dabei ausdrücklich auch eine Anpassung an das Objektiv oder die Auswertung einschließen, beispielsweise eine gezielte Überbetonung von Grün analog zu einem Bayer-Pattern. Damit kann erreicht werden, dass in allen Spektralbändern Bilddaten gleicher Helligkeit aufgenommen werden, oder dass davon gezielt abgewichen wird, um bestimmten spektralen Eigenschaften der zu erfassenden Strukturen entgegenzukommen. Die Anpassung erfolgt im Rahmen der Einrichtung, Wartung oder dynamisch während des Betriebs.

Die Kamera weist vorzugsweise eine Spektrometereinheit auf, um die Intensität des ausgesandten oder empfangenen Lichts in den Spektralbändern zu messen, wobei die Auswertungseinheit dafür ausgebildet ist, eine Sendeleistung, eine Empfangsverstärkung, die Länge der Beleuchtungszeitfenster und/oder die Länge der Aufnahmezeitfenster in Abhängigkeit von der gemessenen Intensität anzupassen. Das Spektrometer vermisst also die tatsächlichen und nicht nur theoretischen spektralen Eigenschaften von Beleuchtung beziehungsweise Aufnahme, um Anpassungen vorzunehmen, etwa als Ausgleich nichtlineare Kennlinien oder thermischer Effekte. Die Spektrometereinheit kann in die Kamera eingebaut oder extern angeschlossen werden. Es ist alternativ denkbar, nur während des Einrichtens oder Wartens ein Spektrometer zu nutzen und die Kamera entsprechend zu parametrieren.

Die Kamera ist vorzugsweise ein kamerabasierter Codeleser, deren Auswertungseinheit für das Erfassen und Auslesen von Codes in den Bilddaten ausgebildet ist. Dieser Codeleser kann die verbesserte spektrale Erfassung nutzen, um beispielsweise mehrere Leseversuche auf Basis der Bilddaten der beiden Zeilen zu unternehmen, die jeweils kontrastreicheren Bilddaten für den Leseversuch heranzuziehen oder die Bilddaten der beiden Zeilen vorab zur Kontrasterhöhung miteinander zu verrechnen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer Kamera mit multispektraler Beleuchtung;
- Fig. 2: eine schematische dreidimensionale Ansicht einer an einem Förderband mit zu erfassenden Objekten montierten Kamera;
- Fig. 3: eine schematische Darstellung der zeitlichen Abfolge von Beleuchtungszeitfenstern und Aufnahmezeitfenstern für eine Aufnahme in drei Farbkanälen mit der ersten Zeile und integrierend über drei Farben mit der zweiten Zeile eines Doppelzeilenempfängers;
- Fig. 4: eine schematische Darstellung ähnlich Figur 3, jedoch mit zwei statt drei Farben;
- Fig. 5: eine schematische Darstellung ähnlich Figur 3, jedoch mit Aufnahme aus zwei Farben kombinierter Farbkanäle in der ersten Zeile;
- Fig. 6: eine schematische Darstellung ähnlich Figur 3, jedoch mit veränderter Reihenfolge der Farben, mit denen beleuchtet wird, einer Aufnahme in drei Farbkanälen mit der ersten Zeile und einer Aufnahme mit aus zwei Farben kombinierten Farbkanälen in der zweiten Zeile; und
- Fig. 7: eine Darstellung ähnlich Figur 3, jedoch mit variabler Länge der Beleuchtungszeitfenster und Aufnahmezeitfenster sowie einer Aufnahme in drei Farbkanälen mit der ersten Zeile und einer Aufnahme mit aus zwei Farben kombinierten Farbkanälen in der zweiten Zeile.

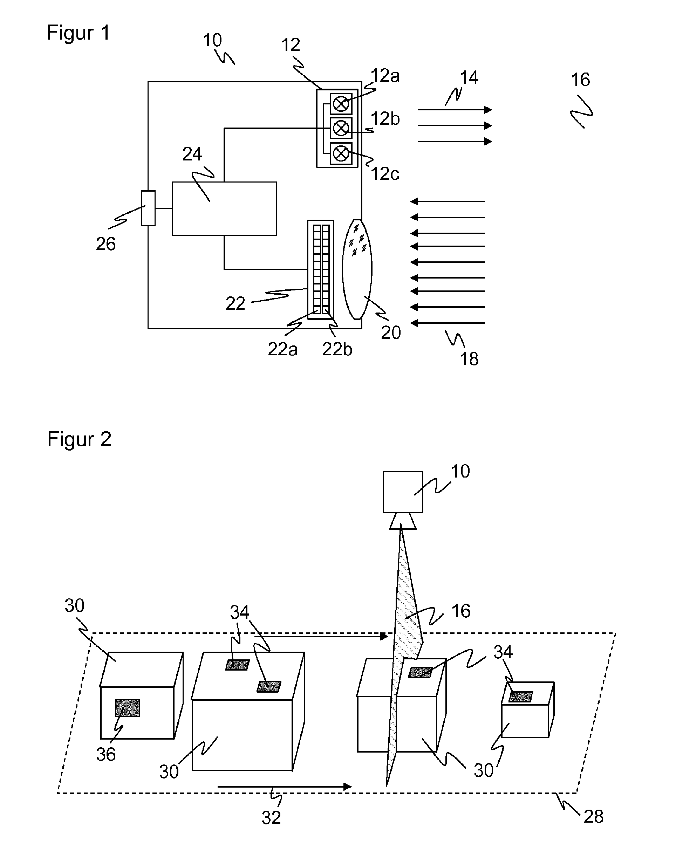

Figur 1 zeigt eine sehr vereinfachte Blockdarstellung einer Kamera 10, die beispielsweise zur Vermessung oder Inspektion von Objekten sowie zum Erfassen von Codes und Auslesen von deren Inhalt eingesetzt werden kann. Die Kamera 10 erzeugt mit einer Beleuchtungseinrichtung 12 Sendelicht 14, um einen Erfassungsbereich 16 zu beleuchten. Eine nicht gezeigte Sendeoptik kann das Beleuchtungsfeld insbesondere zeilenförmig anpassen, und die Beleuchtungseinrichtung 12 kann abweichend von der Darstellung auch extern sein.

Die Beleuchtungseinrichtung 12 weist drei, allgemein mehrere Lichtquellen 12a-c mit unterschiedlichen Spektralbändern auf. Mittels Aktivieren einzelner oder mehrerer Lichtquellen 12a-c wird auf diese Weise Sendelicht 14 mit umschaltbarem spektralem Verhalten erzeugt. Als Lichtquellen 12a-c eignen sich insbesondere LEDs. Dabei sind einige denkbare Farbvarianten, d.h. erzeugte Spektralbänder, möglich: UV-A etwa zum Lesen fluoreszierender Tinte, eine oder mehrere sichtbare Farben wie Rot, Grün, Blau oder Kombinationen Rot-Blau, Blau-Weiß sowie Infrarot in den Untervarianten NIR (Nahes Infrarot, ca. 780-1400 nm), SWIR (kurzwelliges Infrarot, ca. 1400-3000 nm) oder beides. Gerade im NIR-Bereich reflektieren farbige Objekte einen höheren Grauwert. Wie die Beispiele zeigen, ist der Begriff Spektralband weit zu verstehen und bedeutet Festlegung von spektralen Eigenschaften. Das Spektralband kann so breit sein wie das gesamte sichtbare Licht und auch mehrere Spitzen, etwa bei zwei Grundfarben, aufweisen. Anstelle von unterschiedlichen Lichtquellen können auch nur eine Lichtquelle oder mehrere gleichartige Lichtquellen eingesetzt werden, wobei dann ein variables Farbfilter wie ein Filterrad oder ein schaltbares Farb-LCD vorgeordnet ist.

Die Kamera 10 erfasst Empfangslicht 18 aus dem Erfassungsbereich 16 durch ein Aufnahmeobjektiv 20, das hier nur durch eine einfache Linse repräsentiert ist. Ein Lichtempfänger 22 in Form eines Doppelzeilenempfängers mit zwei Zeilen 22a-b von lichtempfindlichen Empfangspixeln erzeugt Bilddaten des Erfassungsbereichs 16 und der dort gegebenenfalls vorhandenen Objekte und Codebereiche. Die Empfangspixel der beiden Zeilen 22a-b sind vorzugsweise untereinander identisch, damit gleichwertige Bilddaten erzeugt werden. Alternativ sind auch Unterschiede denkbar, beispielsweise unterschiedliche Pixelgrößen und damit höhere Empfindlichkeit in der einen Zeile 22a-b und höhere Ortsauflösung in der anderen Zeile 22b-a.

Die Bilddaten werden von einer Auswertungseinheit 24 ausgelesen. Dabei leistet die Auswertungseinheit auch Steuerungsaufgaben, einschließlich des Umschaltens der Beleuchtungseinrichtung 12. Die Auswertungseinheit 24 ist auf einem oder mehreren digitalen Bausteinen implementiert, beispielsweise Mikroprozessoren, ASICs, FPGAs oder dergleichen, die auch ganz oder teilweise außerhalb der Kamera 10 vorgesehen sein können. Eine bevorzugte Auswertung besteht darin, erfasste Bildzeilen zu einem Gesamtbild aneinanderzureihen. Ansonsten können bei der Auswertung die Bilddaten vorbereitend gefiltert, geglättet, helligkeitsnormiert, auf bestimmte Bereiche zugeschnitten oder binarisiert werden. Dann werden beispielsweise interessante Strukturen erkannt und segmentiert, wie einzelne Objekte, Linien oder Codebereiche. Diese Strukturen können vermessen oder auf bestimmte Eigenschaften hin überprüft werden. Sofern Codes gelesen werden sollen, werden diese identifiziert und decodiert, also die in den Codes enthaltene Information ausgelesen.

An einer Schnittstelle 26 der Kamera 10 können Daten ausgegeben werden, und zwar sowohl Auswertungsergebnisse, wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten. Umgekehrt ist möglich, die Kamera 10 über die Schnittstelle 26 zu parametrieren.

Figur 2 zeigt eine mögliche Anwendung der Kamera 10 in Montage an einem Förderband 28, welches Objekte 30, wie durch den Pfeil 32 angedeutet, durch den Erfassungsbereich 16 der Kamera 10 fördert. Die Objekte 30 können an ihren Außenflächen Codebereiche 34 tragen. Aufgabe der Kamera 10 ist, Eigenschaften der Objekte 30 zu erfassen und in einem bevorzugten Einsatz als Codeleser die Codebereiche 34 zu erkennen, die dort angebrachten Codes auszulesen, zu dekodieren und dem jeweils zugehörigen Objekt 30 zuzuordnen. Um auch seitlich angebrachte Codebereiche 36 zu erkennen, werden vorzugsweise mehrere Kameras 10 aus unterschiedlicher Perspektive eingesetzt.

Der Erfassungsbereich 16 der Kamera 10 ist entsprechend dem Doppelzeilenaufbau des Lichtempfängers 22 eine Ebene mit einem zeilenförmigen Lesefeld. Die beiden Zeilen 22a-b liegen dabei so nahe beieinander, dass sie praktisch den gleichen Objektabschnitt erfassen. Indem die Objekte 30 in der Förderrichtung 32 zeilenweise aufgenommen werden, entsteht nach und nach ein Gesamtbild der vorbeigeförderten Objekte 30 samt der Codebereiche 34.

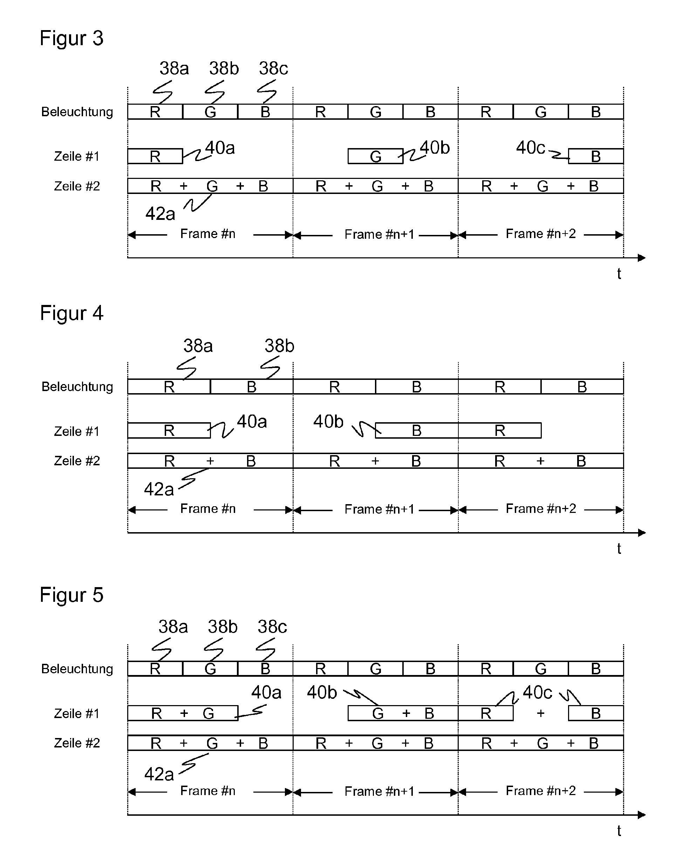

Um nun farbige Objektstrukturen und insbesondere Codebereiche 34 vor farbigen Objekten 30 mit hohem Kontrast erfassen zu können, wird die Beleuchtungseinrichtung 12 mit wechselnden Spektralbändern betrieben, und mit den Zeilen 22a-b werden Bilddaten jeweils gezielt unter bestimmten Beleuchtungen aufgenommen. Dazu werden Beleuchtungszeitfenster der Beleuchtungseinrichtung 12 und Aufnahmezeitfenster der Zeilen 22a-b des Lichtempfängers aufeinander abgestimmt, wie nun anhand mehrerer Beispiele unter Bezugnahme auf die Figuren 3-7 erläutert.

In Figur 3 ändert die Beleuchtungseinrichtung 12 die Spektralbänder des Sendelichts 14 zyklisch. Das kann in einem Pulsbetrieb geschehen. Die Zeilen 22a-b können häufiger belichtet werden als zur Bildaufnahme der bewegten Objekte 30 erforderlich (Oversampling). Anders ausgedrückt ist das durch die Framerate vorgegebene Zeitintervall groß genug, dass währenddessen die Beleuchtung wechseln und mehrfach Empfangslicht 18 durch den Lichtempfänger 22 erfasst werden kann.

Im Beispiel der Figur 3 ergeben sich gleichmäßige Beleuchtungszeitfenster 38a-c. Der Erfassungsbereich 16 wird alternierend und zyklisch rot, grün und blau ausgeleuchtet. Für die erste Zeile 22a werden Aufnahmezeitfenster 40a-c jeweils innerhalb genau eines Beleuchtungszeitfensters 38a-c vorgegeben, und zwar zyklisch mit dem Framewechsel mit anderem Offset. So werden nach drei Frames je einmal Bilddaten bei roter, grüner und blauer Beleuchtung aufgenommen. Das ermöglicht eine Trennung in Farbkanäle ohne Verwendung von Farbfiltern wie bei einem Bayer-Pattern.

Für die zweite Zeile 22b dagegen werden Aufnahmezeitfenster 42a vorgegeben, die über die Beleuchtung mit allen drei Farben reichen. Damit ergibt sich integriert eine licht- und kontraststarke Grauwertaufnahme im gesamten sichtbaren Spektrum. Entgegen der Darstellung sind sende- und empfangsseitig zwischenzeitliche Pausen denkbar.

Der Auswertungseinheit 24 stehen damit einerseits Bilddaten der ersten Zeile 22a mit den drei Farbkanälen zur Verfügung, die allerdings einen gewissen Zeitversatz aufweisen. Wenn der Zeitversatz stört, weil sich die Objekte zu schnell bewegen, können Beleuchtungszeitfenster 38a-c oder Aufnahmezeitfenster 40a-c variiert werden, so dass nur noch mit einem Farbkanal aufgenommen wird. Die Grauwerte der zweiten Zeile 22b sind jedenfalls ohne Zeitversatz zu den jeweils in einer Farbe aufgenommenen Bilddaten der ersten Zeile 22a. Damit stehen zusätzliche Merkmale zur Verfügung, um Objekteigenschaften zu erkennen oder Codes zu lesen.

Figur 4 zeigt eine Variante des Beispiels gemäß Figur 3 mit zwei statt drei Farben. Die dargestellte Kombination Rot-Blau ist besonders vorteilhaft, weil sie komplementäre Kontraste erschließt, kann aber auch durch andere Kombinationen ersetzt werden. Ohnehin sind Farben innerhalb des sichtbaren Spektrums wie in den Figuren 3 und 4 nur beispielhaft zu verstehen. Ebenso sind Kombinationen mit nicht sichtbaren Spektralbändern möglich. So kann analog zu Figur 3 ein Wechsel zwischen ultraviolett, sichtbar und infrarot erfolgen, oder analog zu Figur 4 ein Wechsel von sichtbar und infrarot. Auch Ausführungsformen mit mehr als drei Spektralbändern sind möglich.

Figur 5 zeigt noch ein weiteres Beispiel, bei dem sich die Aufnahmezeitfenster 40a-c der ersten Zeile 22a über zwei Beleuchtungszeitfenster 38a-c erstrecken. Das ergibt zum einen schon an sich eine weitere Variante. In Kombination mit der Aufnahme von Grauwerten über alle Farben durch die zweite Zeile 22b kann durch Subtraktion der Bilddaten der ersten Zeile 22a von den Bilddaten der zweiten Zeile 22b auch die jeweils komplementäre Grundfarbe rekonstruiert werden (also RGB-RG=B, RGB-GB=R und RGB-RB=G).

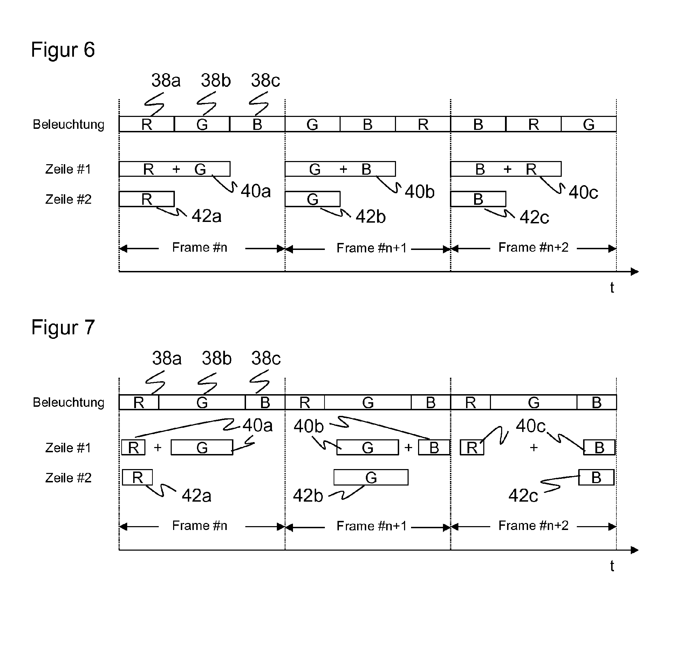

Im rechts dargestellten Frame n+2 der Figur 5 ist das Aufnahmezeitfenster 40c zweigeteilt. Dies zu vermeiden ist einer der Vorteile einer weiteren Ausführungsform gemäß Figur 6. Dabei spielt die Beleuchtungseinrichtung 12 nicht mehr regelmäßig alle Farben Rot, Grün und Blau durch, sondern permutiert die Reihenfolge in sich nochmals zyklisch mit jedem Frame, so dass sich die Abfolge der Spektralbänder oder Farben erst nach drei Frames oder neun Farbwechseln zyklisch wiederholt.

Das hat einmal den Vorteil, dass es für jede Farbe einen Frame gibt, in dem die Beleuchtung mit dieser Phase mit einem bestimmten Offset beginnt. So ist es möglich, die Aufnahmezeitfenster 40a-c, 42a-c innerhalb der Frames zu fixieren und dennoch die unterschiedlichen Spektralbänder auszunutzen. Das erleichtert eine regelmäßige Verarbeitung, da über die Frames kein Zeitversatz entsteht. Außerdem können so Aufnahmezeitfenster 42a-c über jeweils zwei Farben gewählt werden, ohne dass eines davon zweigeteilt werden muss. Im Beispiel der Figur 6 sind die Aufnahmezeitfenster 40a-c der ersten Zeile 22a jeweils direkt an den Anfang der Frames gelegt und erfassen durch die Permutation der Beleuchtungszeitfenster 38a-c trotzdem Bilddaten in allen drei Farbkanälen. Die Aufnahmezeitfenster 42a-c liegen ebenfalls am Anfang der Frames und erfassen alle Kombinationen zweier Farben wie in der Ausführungsform nach Figur 5, jedoch ohne Zweiteilung.

Figur 7 illustriert ein weiteres Beispiel, in dem die Beleuchtungszeitfenster 38a-b und die Aufnahmezeitfenster 40a-c, 42a-c je nach Spektralband in ihrer Länge varüeren. In Analogie zu einem Bayer-Pattern wird länger Grün beleuchtet und aufgenommen als Rot oder Blau. Außerdem haben die Aufnahmezeitfenster 40a-c, 42a-c eine individuelle Variation in Lage und Länge, welche Leistungsunterschiede der Lichtquellen 12a-c oder unterschiedliche spektrale Empfindlichkeiten der Lichtempfangselemente des Lichtempfängers 22 ebenso wie individuelle Unterschiede der beteiligten Bauteile ausgleichen können. Damit können insbesondere Kameraverstärkung und Signal-Rausch-Verhältnis konstant gehalten werden. Um zu illustrieren, dass die verschiedenen Ausführungsformen nach Figur 3 bis 7 auch vorteilhaft kombiniert werden können, wird hier in der ersten Zeile 22a jeweils über eine Farbe und in der zweiten Zeile 22b über zwei Farben aufgenommen. Die schon genannten Variationen mit Aufnahme über alle Farben und mehr oder weniger unterschiedlichen Spektralbänder sind auch hier denkbar, ebenso wie eine Anpassung der Reihenfolge der Farben, um die in Figur 7 gezeigten zweigeteilten Aufnahmezeitfenster 40a-c, 42a-c zumindest teilweise zu vermeiden.

Um individuelle Helligkeitsanpassungen wie in Figur 7 vornehmen zu können, ist denkbar, die Kamera 10 mit einem nicht dargestellten Spektrometer auszurüsten, der in die Kamera 10 integriert oder als externes Modul angeschlossen werden kann. Damit können dynamisch die Intensitäten von Sendelicht 14 und Empfangslicht 18 bestimmt werden. Alternativ werden diese Intensitäten unabhängig ermittelt, etwa mit einem separaten Spektrometer, was dann aber nur zur Einrichtung und Wartung und nicht mehr dynamisch möglich ist. Zwar sind die Lichtquellen 12a-c vorzugsweise spektral und thermisch stabil, aber insoweit das gerade im Pulsbetrieb durch thermische Effekte und nichtlineare Kennlinien nicht erreichbar ist, kann eine derartige Anpassung zum Ausgleich von Driften nützlich sein und die Farbstabilität kontrolliert werden. Mit dem durch das Spektrometer gewonnen Daten können auch Verstärkungsfaktoren oder Aufnahmezeitfenster 40a-c, 42a-c bei Änderungen durch Ersatzteile oder veränderten Objekt. und Hintergrund beziehungsweise Förderbandfarben angepasst werden.

## Patentansprüche

1. Kamera (10) zur Erfassung von Objekten (30) in einem Erfassungsbereich (16), die einen Lichtempfänger (22) mit einer Vielzahl von Lichtempfangspixeln, eine multispektrale Beleuchtungseinrichtung (12) zum Beleuchten des Erfassungsbereichs (16) in unterschiedlichen Spektralbändern und eine Auswertungseinheit (24) aufweist, die dafür ausgebildet ist, den Erfassungsbereich (16) mittels der Beleuchtungseinrichtung (12) während verschiedener Beleuchtungszeitfenster (38a-c) in einem jeweils anderen Spektralband zu beleuchten und mit dem Lichtempfänger (22) in Aufnahmezeitfenstern (40a-c, 42a-c) Bilddaten aus dem Erfassungsbereich (16) aufzunehmen,
**dadurch gekennzeichnet,**
**dass** der Lichtempfänger (22) als Doppelzeilenempfänger mit einer ersten Zeile (22a) und einer zweiten Zeile (22b) von Lichtempfangspixeln ausgebildet ist und dass die Aufnahmezeitfenster (40a-c, 42a-c) für die erste Zeile (22a) und die zweite Zeile (22b) unterschiedlich sind.

2. Kamera (10) nach Anspruch 1,
wobei die Beleuchtungseinrichtung (12) für die Beleuchtung in mindestens zwei der folgenden Spektralbänder ausgebildet ist: rot, grün, blau, sichtbar, infrarot, ultraviolett.

3. Kamera (10) nach Anspruch 1 oder 2,
wobei die Auswertungseinheit (24) dafür ausgebildet ist, das Spektralband der Beleuchtungseinrichtung (12) zyklisch zu wechseln.

4. Kamera (10) nach Anspruch 3,
wobei die Auswertungseinheit (24) dafür ausgebildet ist, die Reihenfolge der von der Beleuchtungseinrichtung (12) erzeugten Spektralbänder in zumindest einigen Zyklen zu permutieren.

5. Kamera (10) nach einem der vorhergehenden Ansprüche,
wobei die Auswertungseinheit (24) dafür ausgebildet ist, die Aufnahmezeitfenster (40a-c, 42a-c) für zumindest eine Zeile (22a-b) jeweils innerhalb eines Beleuchtungszeitfensters (38a-c) festzulegen, so dass eine Aufnahme jeweils während der Beleuchtung mit nur einem Spektralband erfolgt.

6. Kamera (10) nach einem der Ansprüche 1 bis 4,
wobei die Auswertungseinheit (24) dafür ausgebildet ist, die Aufnahmezeitfenster (40a-c, 42a-c) für zumindest eine Zeile (22a-c) jeweils über zwei Beleuchtungszeitfenster (38a-c) festzulegen, so dass eine Aufnahme jeweils während der Beleuchtung zuerst mit einem und dann mit einem anderen Spektralband erfolgt.

7. Kamera (10) nach Anspruch 5 oder 6,
wobei die Auswertungseinheit (24) dafür ausgebildet ist, die Aufnahmezeitfenster (40a-c, 42a-c) für die andere Zeile (22b-a) so festzulegen, dass eine Aufnahme jeweils während der Beleuchtung mit allen Spektralbändern erfolgt.

8. Kamera (10) nach einem der vorhergehenden Ansprüche,
wobei die Auswertungseinheit (24) dafür ausgebildet ist, Bilddaten der beiden Zeilen (22a-b) zueinander zu addieren oder voneinander zu subtrahieren.

9. Kamera (10) nach einem der vorhergehenden Ansprüche,
wobei die Auswertungseinheit (24) dafür ausgebildet ist, die Länge der Beleuchtungszeitfenster (38a-c) und/oder der Aufnahmezeitfenster (40a-c, 42a-c) in Abhängigkeit von der spektralen Empfindlichkeit des Lichtempfängers (22) für die jeweils erfassten Spektralbänder anzupassen.

10. Kamera (10) nach einem der vorhergehenden Ansprüche,
die eine Spektrometereinheit aufweist, um die Intensität des ausgesandten oder empfangenen Lichts in den Spektralbändern zu messen, wobei die Auswertungseinheit (24) dafür ausgebildet ist, eine Sendeleistung, eine Empfangsverstärkung, die Länge der Beleuchtungszeitfenster (38a-c) und/oder die Länge der Aufnahmezeitfenster (40a-c, 42a-c) in Abhängigkeit von der gemessenen Intensität anzupassen.

11. Kamera (10) nach einem der vorhergehenden Ansprüche,
die ein kamerabasierter Codeleser ist, dessen Auswertungseinheit (24) für das Erfassen und Auslesen von Codes (34) in den Bilddaten ausgebildet ist.

12. Verfahren zur Erfassung von Objekten (30) in einem Erfassungsbereich (16), bei dem der Erfassungsbereich (16) während verschiedener Beleuchtungszeitfenster (38a-c) in einem jeweils anderen Spektralband beleuchtet wird und mit einem Lichtempfänger (22) mit einer Vielzahl von Lichtempfangspixeln in Aufnahmezeitfenstern (40a-c, 42a-c) Bilddaten aus dem Erfassungsbereich (16) aufgenommen werden,
**dadurch gekennzeichnet,**
**dass** mit einer ersten Zeile (22a) von Lichtempfangselementen des als Doppelzeilenempfänger ausgebildeten Lichtempfängers (22) Bilddaten in anderen Aufnahmezeitfenstern (40a-c, 42a-c) und somit während der Beleuchtung in mindestens einem anderen Spektralband aufgenommen werden als mit einer zweiten Zeile (22b) von Lichtempfangselementen des Lichtempfängers (22).
